# EUROPEAN PATENT APPLICATION

(11) **EP 4 844 883 A1**
(43) Date of publication of application: **25.11.2026**
(21) Application number: 25913475.7
(22) Date of filing: 11.12.2025
(51) Int. Cl.: H01M 10/0587, H01M 10/0525, H01M 10/42, H01M 4/525, H01M 4/505, H01M 4/36, H01M 4/38, H01M 4/587, H01M 4/02

(54) **LITHIUM SECONDARY BATTERY**

(30) Priority: 23.12.2024 KR 20240194809
(71) Applicant: LG Energy Solution, Ltd., Seoul 07335 (KR)
(72) Inventor: KANG, Hyo Seok, Daejeon 34122 (KR)
(74) Representative: Goddar, Heinz J.
(86) International application number: PCT/KR2025/021377
(87) International publication number: WO 2026/142085

(57) **Abstract**

The present invention relates to a lithium secondary battery including an electrode assembly having a structure in which a stacked sheet including positive electrode plates and negative electrode plates stacked with a separator disposed therebetween is wound, an electrolyte, a can in which the electrode assembly and the electrolyte are accommodated, and a cap assembly sealing an opening of the can, wherein the positive electrode plate includes a positive electrode collector, a positive electrode material mixture layer disposed on at least one surface of the positive electrode collector, a positive electrode tab electrically connected to the positive electrode collector, and a positive electrode tab protection member protecting the positive electrode tab, wherein X defined by Equation (1) is 200 or less. Equation (1): $X = A \times B$

In Equation (1), A is an expansion ratio of the negative electrode plate, and B is a thickness of the positive electrode tab protection member measured in µm.

## Description

### TECHNICAL FIELD

This application claims priority from Korean Patent Application No. 10-2024-0194809, filed on December 23, 2024, the disclosure of which is incorporated by reference herein.

The present invention relates to a lithium secondary battery, and more particularly, to a lithium secondary battery in which lithium plating is suppressed during high-rate charging.

### BACKGROUND ART

Demand for lithium secondary batteries as an energy source has been significantly increased with technological advances in electric vehicles and portable electronic devices.

The lithium secondary battery may be classified into can-type batteries, such as cylindrical or prismatic type batteries, and pouch type batteries depending on a material of a battery case. After a jelly-roll-type electrode assembly, which is prepared by sequentially stacking sheet-shaped positive electrode plate, separator, and negative electrode plate and then winding it in one direction, is accommodated in a battery can, the can-type battery is formed in a sealed form by covering an upper portion of the battery can with a cap plate. The positive electrode plate and the negative electrode plate are provided with strip-shaped positive electrode tab and negative electrode tab, respectively, and the positive electrode tab and the negative electrode tab are respectively connected to electrode terminals to be electrically connected to an external power source. For reference, the positive electrode terminal is the cap plate, and the negative electrode terminal is the battery can.

The can-type battery has a disadvantage in that its energy density is lower than that of the pouch type battery, but since it has advantages of excellent safety and low manufacturing cost, it has recently been increasingly used as a battery for electric vehicles.

However, with respect to the can-type battery, there is a problem in that electrolyte solution impregnation is difficult at a central portion of an electrode due to structural issues of the jelly-roll-type electrode assembly and compression occurs at an upper portion of the electrode assembly to cause localized lithium (Li) plating during high-rate charging. When the lithium plating occurs, since battery performance is rapidly degraded, life characteristics are not only significantly degraded, but also fast-charging capacity of the battery is limited and in severe cases, it may lead to combustion or explosion.

Thus, in order to develop a battery having excellent rapid-charging performance and life characteristics, there is a need for a solution capable of addressing the lithium plating problem of the can-type battery during high-rate charging.

### DISCLOSURE OF THE INVENTION

### TECHNICAL PROBLEM

An aspect of the present invention provides a lithium secondary battery which may achieve excellent rapid-charging performance and life characteristics by suppressing a phenomenon of lithium plating at an upper portion of an electrode assembly during high-rate charge and discharge.

### TECHNICAL SOLUTION

[1] The present invention provides a lithium secondary battery including: an electrode assembly having a structure in which a stacked sheet including positive electrode plates and negative electrode plates stacked with a separator disposed therebetween is wound, an electrolyte, a can in which the electrode assembly and the electrolyte are accommodated, and a cap assembly sealing an opening of the can, wherein the positive electrode plate includes a positive electrode collector, a positive electrode material mixture layer disposed on at least one surface of the positive electrode collector, a positive electrode tab electrically connected to the positive electrode collector, and a positive electrode tab protection member protecting the positive electrode tab, wherein X defined by Equation (1) is 200 or less.
Equation (1): $X = A \times B$

In Equation (1), A is an expansion ratio of the negative electrode plate as defined by Equation (2), and B is a thickness of the positive electrode tab protection member measured in µm. Equation (2): $A = \left\{\left(t-{t}_{0}\right)/t\right\} \times 100$

In Equation (2), t is a thickness of a measurement cell measured after punching the negative electrode plate and the positive electrode plate into a size of 31 mm × 43 mm to prepare two positive electrode samples and three negative electrode samples, removing a negative electrode material mixture layer disposed on one surface of a negative electrode collector from two of the negative electrode samples to prepare single-sided negative electrode samples, stacking the samples in the order of separator/single-sided negative electrode/separator/double-sided positive electrode/separator/double-sided negative electrode/separator/double-sided positive electrode/separator/single-sided negative electrode/separator to prepare an electrode assembly, accommodating the prepared electrode assembly in a pouch, injecting an electrolyte solution and sealing the pouch to prepare the measurement cell, and then charging the measurement cell to 4.2 V under a 0.05 C cut-off condition after pressurizing the measurement cell at 0.156 MPa, and t₀ is a thickness of the measurement cell measured before the pressurizing and the charging.

[2] The present invention provides the lithium secondary battery of [1] above, wherein the expansion ratio (A) of the negative electrode plate defined by Equation (2) is in a range of 2% to 10%.

[3] The present invention provides the lithium secondary battery of [1] or [2] above, wherein the thickness (B) of the positive electrode tab protection member is in a range of 10 µm to 60 µm.

[4] The present invention provides the lithium secondary battery of at least one of [1] to [3] above, wherein the positive electrode tab is disposed at a central portion of the positive electrode plate.

[5] The present invention provides the lithium secondary battery of at least one of [1] to [4] above, wherein a positive electrode loading amount is 20 mg/cm² or more.

[6] The present invention provides the lithium secondary battery of at least one of [1] to [5] above, wherein the positive electrode material mixture layer includes a positive electrode active material having a bimodal particle size distribution.

[7] The present invention provides the lithium secondary battery of [6] above, wherein the positive electrode active material includes large particles having an average particle diameter of 8 µm to 20 µm and small particles having an average particle diameter of less than 8 µm, and the large particles and the small particles each independently include a lithium nickel-based oxide represented by [Formula 1].

[Formula 1] LiₓNiₐCo_{b}M¹_{c}M²_{d}O₂

In [Formula 1], M¹ is at least one selected from manganese (Mn) and aluminum (Al), M² is at least one selected from the group consisting of zirconium (Zr), yttrium (Y), boron (B), tungsten (W), magnesium (Mg), Cerium (Ce), hafnium (Hf), tantalum (Ta), lanthanum (La), titanium (Ti), strontium (Sr), barium (Ba), fluorine (F), phosphorus (P), and sulfur (S), and 0.90≤x≤1.1, 0.50≤a<1.0, 0<b<0.5, 0<c<0.5, and 0≤d≤0.1.

[8] The present invention provides the lithium secondary battery of at least one of [1] to [7] above, wherein the negative electrode plate includes a negative electrode collector, a negative electrode material mixture layer disposed on at least one surface of the negative electrode collector, and a negative electrode tab electrically connected to the negative electrode collector, wherein the negative electrode material mixture layer includes a Si-C composite and a graphite-based negative electrode active material.

[9] The present invention provides the lithium secondary battery of [8] above, wherein the Si-C composite and the graphite-based negative electrode active material are included at a weight ratio of 3:97 to 20:80.

[10] The present invention provides the lithium secondary battery of at least one of [1] to [9] above, wherein a negative electrode loading amount is 10 mg/cm² or more.

[11] The present invention provides the lithium secondary battery of at least one of [1] to [10] above, wherein lithium plating is not observed at an upper portion of the electrode assembly when the lithium secondary battery is subjected to 100 charge-discharge cycles at 40°C under 1.5C charge and 1.5C discharge conditions.

[12] The present invention provides the lithium secondary battery of at least one of [1] to [11] above, wherein the lithium secondary battery is a cylindrical battery.

### ADVANTAGEOUS EFFECTS

Since a lithium secondary battery according to the present invention is designed such that a product of a negative electrode expansion ratio and a thickness of a positive electrode tab protection member is 200 or less, lithium plating at an upper portion of an electrode assembly during high-rate charge and discharge may be effectively suppressed. The lithium plating at the upper portion of the electrode assembly during high-rate charge and discharge mainly occurs in a region where the positive electrode tab protection member is disposed, wherein it is considered to be because compression of an electrode by the positive electrode tab protection member occurs as the negative electrode expands during high-rate charge and discharge. Thus, the present inventors have suppressed the lithium plating at the upper portion of the electrode assembly by adjusting the thickness of the positive electrode tab protection member according to a degree of negative electrode expansion.

### BRIEF DESCRIPTION OF THE DRAWINGS

FIG. 1 is a view illustrating a degree of compression of an electrode assembly in a region where a positive electrode tab protection member is attached during high-rate charge and discharge.
FIG. 2 is a view illustrating a phenomenon of compression of the electrode assembly in a region where the positive electrode tab protection member is not attached during high-rate charge and discharge.
FIG. 3 is a photograph showing a lithium plating state after conventional high-rate charge and discharge.
FIG. 4 is a schematic view of a lithium secondary battery according to an embodiment of the present invention.

### MODE FOR CARRYING OUT THE INVENTION

Hereinafter, the present invention will be described in more detail.

In the present invention, a "negative electrode expansion ratio (A)" represents a degree of volumetric expansion of a negative electrode when fully charged, wherein it refers to a value measured by the following method.

### <Method of Measuring Negative Electrode Expansion Ratio>

After separating a negative electrode plate and a positive electrode plate, for which an expansion ratio is to be measured, from a lithium secondary battery, the separated negative electrode plate and positive electrode plate are each punched into a size of 31 mm × 43 mm to prepare two positive electrode samples and three negative electrode samples. From two of the negative electrode samples, a negative electrode material mixture layer disposed on one surface of a negative electrode collector is removed to prepare single-sided negative electrode samples.

Then, the positive electrode samples and the negative electrode samples are stacked in the order of separator/single-sided negative electrode/separator/double-sided positive electrode/separator/double-sided negative electrode/separator/double-sided positive electrode/separator/single-sided negative electrode/separator to prepare an electrode assembly.

The electrode assembly is accommodated in a pouch, an electrolyte solution is injected, the pouch is sealed to prepare a measurement cell, and a thickness t₀ of the measurement cell is measured.

The measurement cell is mounted on a jig, pressurized at 0.156 MPa, and charged to 4.2 V under a 0.05 C cut-off condition. After completion of charging, the measurement cell is removed from the jig and a thickness t of the charged measurement cell is then measured.

A negative electrode expansion ratio A may be measured by substituting the above-measured t₀ and t into Equation (2) below. Equation (2): $A = \left\{\left(t-{t}_{0}\right)/t\right\} \times 100$

In the present invention, a "loading amount" may be measured by the following method. First, after an electrode assembly is disassembled to separate a positive electrode and a negative electrode, each of the positive electrode and the negative electrode is punched into a size of 5 cm × 5 cm to prepare a positive electrode sample and a negative electrode sample. Thereafter, a weight of each sample is measured using an electronic balance having a readability of 0.0001 g, and a loading amount may be measured by subtracting a weight of a current collector from the measured weight of the sample and then dividing the resulting value by an area (25 cm²) of the sample. In the present invention, for accuracy, five samples were prepared by punching each electrode five times, and an average value of loading amounts measured for the respective samples was evaluated as the loading amount.

As a result of extensive research conducted to solve a problem in which lithium plating occurs at an upper portion of an electrode assembly during high-rate charge and discharge to degrade battery performance, the present inventors have found that the lithium plating at the upper portion of the electrode assembly may be effectively suppressed by adjusting a thickness of a positive electrode tab protection member according to a negative electrode expansion ratio, thereby leading to the completion of the present invention.

Specifically, a lithium secondary battery according to the present invention includes an electrode assembly in which a positive electrode plate, a separator, and a negative electrode plate are sequentially stacked and wound, an electrolyte, and a battery case in which the electrode assembly and the electrolyte are accommodated, wherein the positive electrode plate includes a positive electrode collector, a positive electrode material mixture layer disposed on at least one surface of the positive electrode collector, a positive electrode tab electrically connected to the positive electrode collector, and a positive electrode tab protection member protecting the positive electrode tab, wherein X defined by Equation (1) is 200 or less. Equation (1): $X = A \times B$

In Equation (1), A is an expansion ratio of the negative electrode plate as defined by Equation (2), and B is a thickness of the positive electrode tab protection member measured in µm. Equation (2): $A = \left\{\left(t-{t}_{0}\right)/t\right\} \times 100$

In Equation (2), t is a thickness of a measurement cell measured after punching the negative electrode plate and the positive electrode plate into a size of 31 mm × 43 mm to prepare two positive electrode samples and three negative electrode samples, removing a negative electrode material mixture layer disposed on one surface of a negative electrode collector from two of the negative electrode samples to prepare single-sided negative electrode samples, stacking the samples in the order of separator/single-sided negative electrode/separator/double-sided positive electrode/separator/double-sided negative electrode/separator/double-sided positive electrode/separator/single-sided negative electrode/separator to prepare an electrode assembly, accommodating the prepared electrode assembly in a pouch, injecting an electrolyte solution and sealing the pouch to prepare the measurement cell, and then charging the measurement cell to 4.2 V under a 0.05 C cut-off condition after pressurizing the measurement cell at 0.156 MPa, and t₀ is a thickness of the measurement cell measured before the pressurizing and the charging.

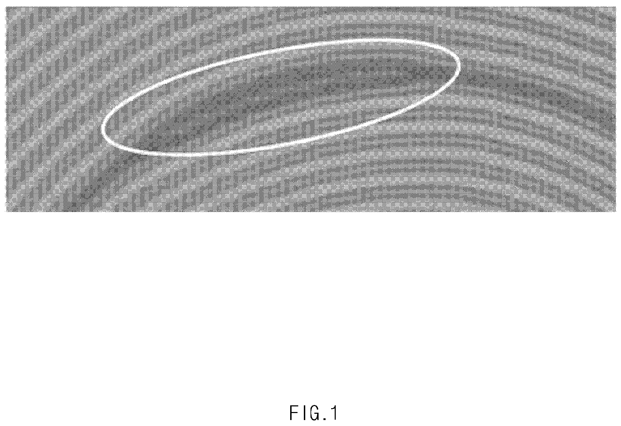

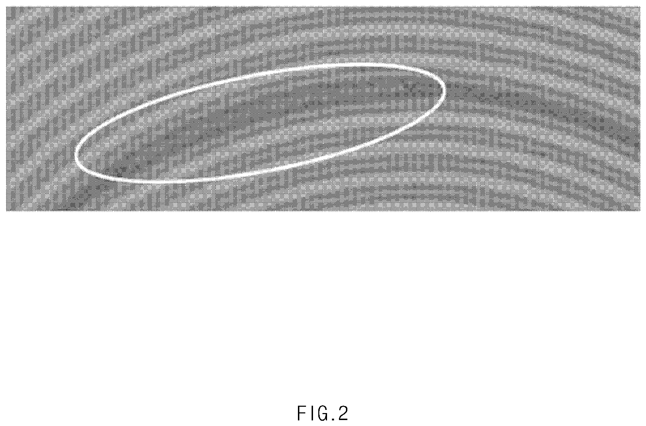

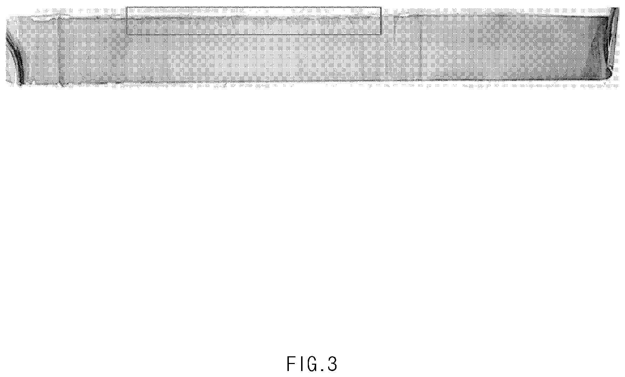

Volumetric expansion of a negative electrode occurs abruptly during high-rate charging such as rapid charging, and as a result, a compression phenomenon occurs in which the electrode assembly is compressed and deformed. With respect to a wound-type electrode assembly, a protection member may be attached to a positive electrode tab in order to prevent mechanical damage to the positive electrode tab and occurrence of a short circuit, wherein in a case in which the positive electrode tab protection member is attached, a thickness of the corresponding portion increases, and as a result, since a compression phenomenon occurs in a portion overlapping a region to which the positive electrode tab protection member is attached, deformation of the electrode assembly is aggravated. A view illustrating deformation of the electrode assembly in the portion to which the positive electrode tab protection member of the wound-type electrode assembly is attached during high-rate charging is illustrated in FIG. 1, and a view illustrating deformation of the electrode assembly in a portion to which the positive electrode tab protection member is not attached is illustrated in FIG. 2. From FIGS. 1 and 2, it may be confirmed that the compression phenomenon of the electrode assembly is more severe in the portion to which the positive electrode tab protection member is attached. More electrolyte solution is expelled from the corresponding region due to expansion of the negative electrode during charging as the compression of the electrode assembly increases, and as a result, since a difference in electrolyte solution concentration between the corresponding region and surrounding regions having less compression occurs to increase resistance and increase lithium plating. A photograph illustrating occurrence of lithium plating after high-rate charging of a lithium secondary battery including the wound-type electrode assembly is shown in FIG. 3. From FIG. 3, it may be confirmed that the lithium plating is concentrated in the region overlapping the region to which the positive electrode tab protection member is attached.

Since the present invention designs a lithium secondary battery such that X of Equation (1), which is expressed as a product of a negative electrode plate expansion ratio and a thickness of the positive electrode tab protection member, is 200 or less, the compression of the electrode assembly in the region overlapping the region to which the positive electrode tab protection member is attached during high-rate charging is reduced, and accordingly, lithium plating at an upper portion of the electrode assembly may be suppressed.

According to studies conducted by the present inventors, in a case in which X is greater than 200, since the compression phenomenon of the electrode assembly is aggravated, the lithium plating is increased. Although the compression of the electrode assembly decreases as X decreases, a shortcircuit prevention effect may be reduced if the thickness of the positive electrode tab protection member is excessively small. Thus, X may preferably be in a range of 50 to 200, more preferably 100 to 200, and even more preferably about 100 to 190.

The expansion ratio of the negative electrode plate is a value measured by preparing a stacked-type electrode assembly using the positive electrode samples and negative electrode samples prepared by respectively punching the positive electrode plates and negative electrode plates constituting the electrode assembly into a predetermined size, accommodating the stacked-type electrode assembly in a pouch case, and then charging and discharging the stacked-type electrode assembly under a pressurized condition. A detailed measurement method of the expansion ratio of the negative electrode plate is the same as described above. With respect to a cylindrical type battery, a degree of expansion of the negative electrode plate may not be measured due to a can serving as a case. Accordingly, the present inventors prepared pouch type battery samples to measure the expansion ratio of the negative electrode plate. Also, with respect to the cylindrical type battery, an electrode receives a force in an opposite direction due to the can serving as the case during electrode expansion, wherein in order to simulate this, the expansion ratio was measured under a pressurized condition.

In the present invention, the expansion ratio (A) of the negative electrode plate defined by Equation (2) may be in a range of 2% to 10%, preferably 3% to 10%, and more preferably 3% to 8%. When the expansion ratio of the negative electrode plate satisfies the above range, the lithium plating at the upper portion of the electrode assembly may be effectively suppressed. If the expansion ratio of the negative electrode plate is excessively large, the deformation of the electrode assembly during high-rate charging is aggravated and, as a result, the lithium plating is increased.

The expansion ratio of the negative electrode plate is affected by a composition of the negative electrode material mixture layer, particularly a type and content of a negative electrode active material, a porosity of the negative electrode, and a negative electrode loading amount. For example, the expansion ratio of the negative electrode plate increases if a content of a silicon-based negative electrode active material having a large volumetric expansion during charge and discharge increases, or if negative electrode pores capable of absorbing volumetric changes decrease. Also, the expansion ratio of the negative electrode plate increases if the negative electrode loading amount increases. Thus, the expansion ratio of the negative electrode plate may be controlled by appropriately adjusting these factors.

In the present invention, the thickness of the positive electrode tab protection member may be in a range of 10 µm to 60 µm, preferably 20 µm to 60 µm, and more preferably 30 µm to 50 µm. When the thickness of the positive electrode tab protection member satisfies the above range, effects of protecting the positive electrode tab and suppressing the lithium plating may be obtained. If the thickness of the positive electrode tab protection member is excessively small, effects of protecting the positive electrode tab and preventing a short circuit may be insufficient, and if the thickness is excessively large, the deformation of the electrode assembly during high-rate charging and discharging may be aggravated.

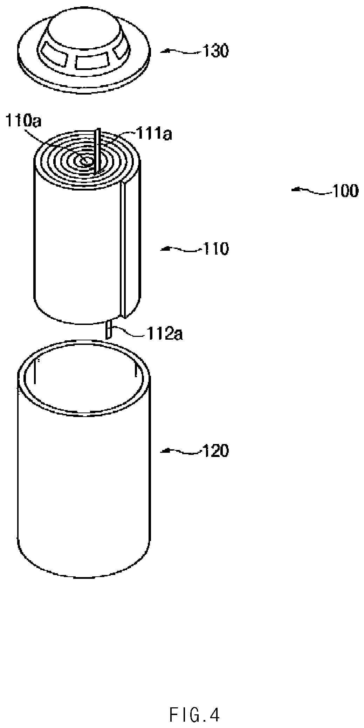

FIG. 4 illustrates a lithium secondary battery according to the present invention. Hereinafter, the lithium secondary battery of the present invention will be described in more detail with reference to FIG. 4.

The lithium secondary battery according to the present invention includes an electrode assembly 110, an electrolyte (not shown), a can 120 in which the electrode assembly and the electrolyte are accommodated, and a cap assembly 130 sealing an opening of the can.

### <Electrode Assembly>

The electrode assembly 110 has a structure in which a stacked sheet, in which a positive electrode plate and a negative electrode plate are stacked with a separator disposed therebetween, is wound, wherein, for example, it may be a jelly-roll-type electrode assembly.

The positive electrode plate includes a positive electrode tab 111a coupled to the cap assembly 130, and the negative electrode plate includes a negative electrode tab 112a coupled to the can 120.

The electrode assembly 110 according to the present invention may be prepared by winding a stacked sheet, which is formed by sequentially stacking a separator, a positive electrode plate, a separator, and a negative electrode plate, in one direction.

The positive electrode plate and the negative electrode plate have a structure in which an electrode material mixture layer is disposed on at least a portion of a sheet-shaped electrode current collector, and may include an uncoated portion in which the electrode material mixture layer is not disposed on a portion of the electrode current collector and the electrode current collector is exposed. A positive electrode tab or a negative electrode tab may be electrically connected to the uncoated portion. The uncoated portion may be located at a central portion and/or an end portion of the electrode current collector. For example, the positive electrode plate may have a middle-tab structure in which an uncoated portion is formed at a central portion of the positive electrode collector and a positive electrode tab is connected to the uncoated portion. In a case in which the positive electrode plate has the middle-tab structure, a travel distance of electrons flowing through the tab is shortened, there is an advantage in that resistance is reduced.

The negative electrode plate may have a structure in which a non-coated portion is formed at at least one end of the negative electrode collector, and a negative electrode tab is connected to the non-coated portion. When the negative electrode tab is formed at one end of the negative electrode collector, there is an advantage in that an increase in an outer diameter of a jelly-roll due to a step difference of the negative electrode tab or occurrence of cracks in the negative electrode may be suppressed.

### Positive Electrode Plate

The positive electrode plate according to the present invention, for example, includes a positive electrode material mixture layer disposed on one surface or both surfaces of a sheet-shaped positive electrode collector, a positive electrode tab electrically connected to the positive electrode collector, and a positive electrode tab protection member disposed to cover at least a portion of the positive electrode tab.

As the positive electrode collector, positive electrode collectors commonly used in the art may be used, and for example, aluminum, stainless steel, nickel, titanium, fired carbon, aluminum or stainless steel that is surface-treated with one of carbon, nickel, titanium, silver, or the like, and an aluminum-cadmium alloy may be used.

The positive electrode collector may typically have a thickness of 3 µm to 500 µm. If necessary, microscopic irregularities may be formed on a surface of the positive electrode collector to enhance bonding strength of the positive electrode active material.

The positive electrode material mixture layer includes a positive electrode active material, and may further include a positive electrode conductive agent and a positive electrode binder as needed.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal (M) oxide (e.g., Li(Niₚ₂Co_{q2}Mnᵣ₂M ₛ₂)O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r2, and s2 are atomic fractions of each independent elements, wherein 0<p2<1, 0<q2<1, 0<r2<1, 0< s 2<1, and p2+q2+r2+s2=1), etc.), and any one thereof or a compound of two or more thereof may be included.

Preferably, the positive electrode active material may include a lithium transition metal oxide represented by [Formula 1] below.

[Formula 1] LiₓNiₐCo_{b}M¹_{c}M²_{d}O₂

In Formula 1, M¹ is at least one selected from manganese (Mn) and Al, and may be preferably Mn or a combination of Mn and Al in terms of durability.

M² may be at least one selected from the group consisting of zirconium (Zr), yttrium (Y), boron (B), tungsten (W), magnesium (Mg), Cerium (Ce), hafnium (Hf), tantalum (Ta), lanthanum (La), titanium (Ti), strontium (Sr), barium (Ba), fluorine (F), phosphorus (P), and sulfur (S).

x represents an atomic fraction of lithium in the lithium transition metal oxide, wherein x may satisfy 0.90≤x≤1.1, may preferably satisfy 0.95≤x≤1.08, and may more preferably satisfy 1.0≤x≤1.08.

a represents an atomic fraction of nickel among metallic elements excluding lithium in the lithium transition metal oxide, wherein a may satisfy 0.50≤a<1.0, 0.60≤a≤0.98, 0.65≤a≤0.98, 0.80≤a≤0.98, or 0.83≤a≤0.98. In a case in which the amount of the nickel satisfies the above range, high capacity characteristics may be achieved.

b represents an atomic fraction of cobalt among the metallic elements excluding lithium in the lithium transition metal oxide, wherein b may satisfy 0<b<0.5, 0<b<0.4, 0.01≤b≤0.3, or 0.01≤b≤0.17.

c represents an atomic fraction of M¹ among the metallic elements excluding lithium in the lithium transition metal oxide, wherein c may satisfy 0<c<0.5, 0<c<0.4, 0.01≤c≤0.3, or 0.01≤c≤0.17.

d represents an atomic fraction of M² among the metallic elements excluding lithium in the lithium transition metal oxide, wherein d may satisfy 0≤d≤0.1 or 0≤d≤0.05.

The positive electrode active material may have a bimodal particle size distribution. For example, the positive electrode active material may include large particles having a relatively larger average particle diameter and small particles having a relatively smaller average particle diameter. An average particle diameter of the positive electrode active material may be a value (D₅₀) measured as a particle size at which a cumulative volume reaches 50% in a volume cumulative distribution of the positive electrode active material measured using a laser diffraction method, or an arithmetic mean value calculated after measuring particle diameters of particles observed through scanning electron microscopy (SEM) analysis in an electrode state.

For example, the large particle may have an average particle diameter of 8 µm to 20 µm, preferably 10 µm to 20 µm, and more preferably 10 µm to 18 µm, and the small particle may have an average particle diameter of less than 8 µm, preferably 2 µm to 7 µm, and more preferably 3 µm to 7 µm. In a case in which the positive electrode active material having a bimodal particle size distribution as described above is included, since electrode density is increased, high energy density may be achieved.

The large particle and the small particle may have the same composition or different compositions. Specifically, the large particle and the small particle may each independently include the lithium transition metal oxide represented by [Formula 1].

The positive electrode active material may be included in an amount of 60 wt% to 99 wt%, preferably 70 wt% to 99 wt%, and more preferably 80 wt% to 98 wt% based on a total weight of the positive electrode material mixture layer.

The positive electrode binder is a component that assists in the binding between the positive electrode active material and the positive electrode conductive agent and in the binding with the current collector. Examples of the positive electrode binder may be polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene (PE), polypropylene, an ethylene-propylene-diene monomer, a sulfonated ethylene-propylene-diene monomer, a styrene-butadiene rubber, a fluoro rubber, or various copolymers.

The positive electrode binder may commonly be included in an amount of 1 wt% to 20 wt%, preferably 1 wt% to 15 wt%, and more preferably 1 wt% to 10 wt% based on the total weight of the positive electrode material mixture layer.

The positive electrode conductive agent is a component for further improving conductivity of the positive electrode active material, wherein it is not particularly limited as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorocarbon powder; conductive powder such as aluminum powder and nickel powder; conductive whiskers such as zinc oxide whiskers and potassium titanate whiskers; conductive metal oxide such as titanium oxide; or polyphenylene derivatives, may be used.

The positive electrode conductive agent may commonly be included in an amount of 1 wt% to 20 wt%, preferably 1 wt% to 15 wt%, and more preferably 1 wt% to 10 wt% based on the total weight of the positive electrode material mixture layer.

The positive electrode material mixture layer, for example, may be prepared by preparing a positive electrode slurry by mixing the positive electrode active material, the positive electrode binder, the positive electrode conductive agent, and a solvent, coating the positive electrode slurry on one surface or both surfaces of the positive electrode collector, and then drying and rolling the coated positive electrode collector.

The solvent for a positive electrode slurry may include an organic solvent, such as dimethyl sulfoxide (DMSO), isopropyl alcohol, N-methylpyrrolidone (NMP), and acetone, and may be used in an amount such that desirable viscosity is obtained when the positive electrode active material, the positive electrode binder, and the positive electrode conductive agent are included. For example, the solvent for a positive electrode slurry may be included in an amount such that a concentration of a solid content including the positive electrode active material as well as optionally the positive electrode binder and the positive electrode conductive agent is in a range of 50 wt% to 95 wt%, preferably 70 wt% to 95 wt%, and more preferably 70 wt% to 90 wt%.

The positive electrode material mixture layer is formed on a partial region of the surface of the positive electrode collector, and the positive electrode tab 111a is coupled to a region (uncoated portion) where the positive electrode material mixture layer is not formed and the positive electrode collector is exposed. The positive electrode tab 111a is electrically connected to the positive electrode collector and the cap assembly 130 to apply current to a positive electrode.

The positive electrode tab 111a may be disposed at a central portion of the positive electrode plate. In this case, the central portion of the positive electrode plate refers to a region from a point corresponding to 30% of a total length of the positive electrode plate to a point corresponding to 50% of the total length, measured from one end of the positive electrode plate when the electrode assembly is unwound. When the positive electrode tab is disposed at the central portion of the positive electrode plate, since the travel distance of electrons flowing through the tab is shortened, there is an advantage in that resistance is reduced.

At least a portion of the positive electrode tab 111a is covered by a positive electrode tab protection member. The positive electrode tab protection member is to prevent mechanical damage and short circuit of the positive electrode tab 111a, wherein any positive electrode tab protection members commonly used in the art may be used without limitation. For example, the positive electrode tab protection member may be a protective tape including a base material layer formed of an insulating material and an adhesive layer disposed on one surface of the base material layer. The base material layer may be a resin material such as polypropylene, polyimide, or polyethylene terephthalate.

The positive electrode tab protection member may have a thickness of 10 µm to 60 µm, preferably 20 µm to 60 µm, and more preferably 30 µm to 50 µm. When the thickness of the positive electrode tab protection member satisfies the above range, the effects of protecting the positive electrode tab and suppressing the lithium plating may be achieved. If the thickness of the positive electrode tab protection member is excessively small, the effects of protecting the positive electrode tab and preventing the short circuit may be insufficient, and if the thickness is excessively large, the deformation of the electrode assembly during high-rate charging and discharging may be aggravated.

In the present invention, the positive electrode plate may have a positive electrode loading amount of 20 mg/cm² or more, preferably 20 mg/cm² to 40 mg/cm², and more preferably 20 mg/cm² to 30 mg/cm². When the positive electrode loading amount satisfies the above range, high energy density may be achieved.

### Negative Electrode Plate

The negative electrode plate according to the present invention, for example, includes a negative electrode material mixture layer disposed on one surface or both surfaces of a sheet-shaped negative electrode collector, and a negative electrode tab electrically connected to the negative electrode collector.

As the negative electrode collector, negative electrode collectors commonly used in the art may be used, and for example, copper, stainless steel, nickel, titanium, fired carbon, copper or stainless steel that is surface-treated with one of carbon, nickel, titanium, silver, or the like, and an aluminum-cadmium alloy may be used. The negative electrode collector may typically have a thickness of 3 µm to 500 µm. If necessary, microscopic irregularities may be formed on a surface of the negative electrode collector to enhance bonding strength of the negative electrode active material.

The negative electrode material mixture layer includes a negative electrode active material, and may further include a negative electrode conductive agent and a negative electrode binder as needed.

As the negative electrode active material, negative electrode active materials commonly used in the art may be used, and for example, a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used.

Preferably, the negative electrode active material may include a Si-C composite and a graphite-based negative electrode active material.

The Si-C composite is a material having a structure in which silicon and carbon are composited by depositing or embedding Si in a carbon matrix, wherein it has lower irreversible capacity and better electrical conductivity than silicon oxide (SiO) which has conventionally been mainly used as a Si-based negative electrode active material. Thus, in a case in which the Si-C composite is used, higher energy density may be achieved compared to a case in which the silicon oxide is used, and rapid-charging performance may be improved.

Preferably, the Si-C composite may have a Si grain size of 20 nm or less, preferably 1 nm to 20 nm, and more preferably 1 nm to 18 nm. When the grain size of the Si-C composite satisfies the above range, effects of improving cell resistance characteristics and life characteristics are excellent.

Also, the Si-C composite may have a D₅₀ of 1 µm to 15 µm, preferably 2 µm to 10 µm, and more preferably 3 µm to 10 µm. Furthermore, the Si-C composite may have a D₁₀ of 5 µm or less and preferably 1 µm to 5 µm, and may have a D₉₀ of 6 µm to 20 µm and preferably 6 µm to 15 µm. When a particle size distribution of the Si-C composite satisfies the above ranges, high energy density may be achieved due to an increase in density of the negative electrode.

In a case in which the Si-C composite is used as the negative electrode active material, effects of improving capacity and rapid-charging performance may be obtained, but there is a problem in that the life characteristics may be degraded due to volume changes of the Si-C composite during charge and discharge. Accordingly, in the present invention, since the Si-C composite is used together with the graphite-based negative electrode active material, the volume changes of the Si-C composite during charge and discharge are suppressed by the graphite-based negative electrode active material, and thus, the life characteristics may be improved.

The graphite-based negative electrode active material includes artificial graphite. Preferably, the graphite-based negative electrode active material may be a mixture of artificial graphite and natural graphite.

The artificial graphite may be included in an amount of 40 wt% to 60 wt%, preferably 45 wt% to 55 wt%, and more preferably 47 wt% to 53 wt% based on a total weight of the graphite-based negative electrode active material. When the amount of the artificial graphite in the graphite-based negative electrode active material satisfies the above range, rate capability and processability of the negative electrode are excellent, and since volume expansion of the Si-C composite during charge and discharge is suppressed, the life characteristics are improved.

When the graphite-based negative electrode active material is a mixture of artificial graphite and natural graphite, a weight ratio of the artificial graphite to the natural graphite may be in a range of 40:60 to 60:40, preferably 45:55 to 55:45, and more preferably 47:53 to 53:47. When the mixing ratio of the artificial graphite to the natural graphite satisfies the above range, the rate capability and processability of the negative electrode are excellent, and the volume changes of the Si-C composite during charge and discharge may be effectively suppressed.

In the present invention, the Si-C composite and the graphite-based negative electrode active material may be included at a weight ratio of 3:97 to 20:80, preferably 3:97 to 15:85, and more preferably 5:95 to 10:90. When the mixing ratio of the Si-C composite to the graphite-based negative electrode active material satisfies the above range, both rapid-charging performance and life characteristics are excellent.

A total amount of the negative electrode active material including the graphite-based negative electrode active material and the Si-C composite may be in a range of 80 wt% to 99 wt%, preferably 85 wt% to 99 wt%, and more preferably 90 wt% to 99 wt% based on a total weight of the negative electrode material mixture layer.

The negative electrode conductive agent is used to provide conductivity to the negative electrode, wherein any conductive agent may be used without particular limitation as long as it is used as a conductive agent in a lithium secondary battery. Specific examples of the negative electrode conductive agent may be a carbon based-material such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. Preferably, carbon black, acetylene black, Ketjen black, channel black, furnace black, lamp black, thermal black, carbon fibers, carbon nanotubes, or combinations thereof may be used as the negative electrode conductive agent, and it is more preferable to use a point-type conductive agent and a line-type conductive agent together in terms of improving conductivity. In this case, the point-type conductive agent refers to a material having a particulate shape and forming point-type contact with the negative electrode active material, wherein the point-type conductive agent, for example, may be carbon black, acetylene black, Ketjen black, channel black, furnace black, lamp black, or thermal black, and the line-type conductive agent refers to a material forming line-type contact with the negative electrode active material, wherein the line-type conductive agent, for example, may be carbon fibers or carbon nanotubes.

The negative electrode conductive agent may be typically included in an amount of 1 wt% to 30 wt%, preferably 1 wt% to 20 wt%, and more preferably 1 wt% to 10 wt% based on the total weight of the negative electrode material mixture layer.

Next, the negative electrode binder improves adhesion between the negative electrode active material particles and adhesion between the negative electrode active material and the negative electrode collector, wherein any materials may be used without particular limitation as long as they are used as a negative electrode binder of a lithium secondary battery. Specific examples of the negative electrode binder may be polyvinylidene fluoride (PVDF), a vinylidene fluoridehexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), a fluoro rubber, and various copolymers thereof, and any one thereof or a mixture of two or more thereof may be used.

The negative electrode binder may be included in an amount of 1 wt% to 30 wt%, preferably 1 wt% to 20 wt%, and more preferably 1 wt% to 10 wt% based on the total weight of the negative electrode material mixture layer.

The negative electrode material mixture layer may have a single-layer structure or a multilayer structure. In a case in which the negative electrode material mixture layer has a multilayer structure composed of two or more layers, each layer may have different types and/or amounts of the negative electrode active material, the negative electrode binder, and/or the negative electrode conductive agent. Performance characteristics, such as rapid-charging performance and output characteristics, of the battery may be appropriately controlled by forming the negative electrode material mixture layer in a multilayer structure and varying a composition of each layer.

The negative electrode material mixture layer, for example, may be prepared by dissolving or dispersing the negative electrode active material, the negative electrode binder, the negative electrode conductive agent, and/or a dispersant in a solvent to prepare a negative electrode slurry composition, coating the negative electrode collector with the negative electrode slurry, and then drying and rolling the coated negative electrode collector.

As the solvent of the negative electrode slurry, common solvents used in the art for preparing a negative electrode slurry, for example, dimethyl sulfoxide (DMSO), isopropyl alcohol, N-methylpyrrolidone (NMP), dimethyl formamide (DMF), acetone, water, or a mixture thereof may be used. An amount of the solvent used may be sufficient if the solvent may dissolve or disperse the negative electrode active material, the conductive agent, the binder, and the dispersant in consideration of a coating thickness of a slurry and manufacturing yield, and may allow to have a viscosity that may provide excellent thickness uniformity during the subsequent coating for the preparation of the negative electrode.

The negative electrode material mixture layer is formed on a partial region of the surface of the negative electrode collector, and the negative electrode tab 112a is coupled to a region (uncoated portion) where the negative electrode material mixture layer is not formed and the negative electrode collector is exposed. The negative electrode tab 112a is electrically connected to the negative electrode collector and a bottom portion of the can 120 to apply current to the negative electrode.

The negative electrode tab 112a may be disposed at one end portion or both end portions of the negative electrode plate. When the negative electrode tab is disposed at the end portion of the negative electrode plate, an increase in an outer diameter of a jelly-roll due to a step difference of the negative electrode tab or occurrence of cracks in the negative electrode may be suppressed.

The negative electrode plate may have a negative electrode loading amount of 10 mg/cm² or more, preferably 10 mg/cm² to 30 mg/cm², and more preferably 10 mg/cm² to 20 mg/cm². When the negative electrode loading amount satisfies the above range, high energy density may be achieved.

### Separator

The separator separates the negative electrode and the positive electrode and provides a movement path of lithium ions, wherein any separator may be used as the separator without particular limitation as long as it is typically used in a lithium secondary battery. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength.

### <Electrolyte>

The lithium secondary battery according to the present invention includes an electrolyte.

The electrolyte may include an organic solvent and a lithium salt.

Any organic solvent may be used as the organic solvent without particular limitation so long as it may function as a medium through which ions involved in an electrochemical reaction of the battery may move. Specifically, an esterbased solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a doublebond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or a combination thereof may be used. A concentration of the lithium salt is preferably used in a range of 0.1 M to 5.0 M, more preferably, 0.1 M to 3.0 M. Since the electrolyte may have appropriate conductivity and viscosity when the concentration of the lithium salt is included within the above range, excellent performance of the electrolyte may be obtained and lithium ions may effectively move.

In order to improve life characteristics of the battery, suppress a reduction in battery capacity, and improve discharge capacity of the battery, the electrolyte may further include an additive in addition to the above components. For example, the electrolyte may include at least one additive selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

Examples of the cyclic carbonate-based compound may be vinylene carbonate (VC) or vinyl ethylene carbonate.

An example of the halogen-substituted carbonate-based compound may be fluoroethylene carbonate (FEC).

Examples of the sultone-based compound may be at least one compound selected from the group consisting of 1,3-propane sultone (PS), 1,4-butane sultone, ethane sultone, 1,3-propene sultone (PRS), 1,4-butene sultone, and 1-methyl-1,3-propene sultone.

Examples of the sulfate-based compound may be ethylene sulfate (Esa), trimethylene sulfate (TMS), or methyl trimethylene sulfate (MTMS).

Examples of the phosphate-based compound may be at least one compound selected from the group consisting of lithium difluoro (bisoxalato)phosphate, lithium difluorophosphate, tetramethyl trimethyl silyl phosphate, trimethyl silyl phosphite, tris(2,2,2-trifluoroethyl)phosphate, and tris(trifluoroethyl)phosphite.

Examples of the borate-based compound may be tetraphenylborate, lithium oxalyldifluoroborate (LiODFB), and lithium bis(oxalato)borate (LiB(C₂O₄)₂, LiBOB).

Examples of the nitrile-based compound may be at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

An example of the benzene-based compound may be fluorobenzene, examples of the amine-based compound may be triethanolamine or ethylenediamine, and an example of the silane-based compound may be tetravinylsilane.

The lithium salt-based compound is a compound different from the lithium salt included in the non-aqueous electrolyte, wherein the lithium salt-based compound may include lithium difluorophosphate (LiDFP), LiPO₂F₂, or LiBF₄.

The additive may be included in an amount of 0.1 wt% to 10 wt%, preferably, 0.1 wt% to 5 wt% based on a total weight of the electrolyte.

### <Can>

The can 120 includes an accommodation portion accommodating the electrode assembly 110 and the electrolyte (not shown), and a coupling portion provided at an upper side of the accommodation portion and coupled to the cap assembly 130.

The can 120 may be a general cylindrical battery can known in the art, and in this case, the lithium secondary battery according to the present invention may be a cylindrical battery. For example, the can may be a cylindrical container having an opening formed at one end thereof, wherein it may be formed of a conductive metallic material such as aluminum or steel. The electrode assembly is accommodated in an inner space through the opening, and the electrolyte is injected therethrough. If necessary, a beading portion and a crimping portion may be provided at an upper end of the cylindrical can. The beading portion suppresses movement of the electrode assembly accommodated in the can and functions as a support on which a sealing body is stably placed, wherein it may be formed by pressing an outer circumferential surface of the cylindrical can to a predetermined depth.

The crimping portion is for coupling and sealing the sealing body and the cylindrical can, wherein it has an extended and bent shape to surround a portion of an upper surface of the sealing body.

A bottom surface of the can 120 may be coupled to the negative electrode tab 112a of the electrode assembly 110.

### <Cap Assembly>

The cap assembly 130 according to the present invention includes a cap plate and a sealing gasket that provides airtightness between the cap plate and the battery can and has insulating properties, and if necessary, may further include a connection plate electrically and mechanically coupled to the cap plate. The cap plate may be pressed onto the beading portion formed on the battery can and fixed by the crimping portion.

The cap plate is a component formed of a conductive metallic material, wherein it covers an upper opening of the battery can. The cap plate is electrically connected to the positive electrode tab 111a of the electrode assembly, and is electrically insulated from the can 120 through the sealing gasket. Accordingly, the cap plate may function as a positive electrode terminal of the secondary battery. The cap plate may include a protrusion formed by protruding upward from a central portion thereof, and the protrusion may contact an external power source to allow a current to be applied from the external power source.

The cylindrical battery, if necessary, may further include a safety vent and/or a current interrupt device (CID) below the cap plate.

The safety vent serves to interrupt current or to discharge gas when internal pressure of the battery increases due to an abnormal current, and may be formed of a metallic material. A thickness of the safety vent may vary depending on the material and structure thereof, is not particularly limited as long as it may discharge gas while rupturing when a predetermined high pressure is generated inside the battery, and for example, may be in a range of 0.2 mm to 0.6 mm.

The current interrupt device (CID) is disposed below the safety vent and above the electrode assembly to electrically connect the electrode assembly and the safety vent. The current interrupt device includes a CID filter that contacts the safety vent to transmit current and interrupts current when high pressure is generated inside the battery can, and a CID gasket that spatially separates and electrically insulates the CID filter from the safety vent, except for a partial region.

In the lithium secondary battery according to the present invention as described above, the compression phenomenon of the electrode assembly during high-rate charging is reduced by adjusting the positive electrode tab protection member and the expansion ratio of the negative electrode plate to satisfy specific conditions. Specifically, in the lithium secondary battery according to the present invention, lithium plating is not observed at the upper portion of the electrode assembly when the lithium secondary battery is subjected to 100 charge-discharge cycles under 1.5C charge and 1.5C discharge conditions. As described above, since the lithium plating occurring at the upper portion of the electrode assembly during high-rate charging is significantly reduced in the lithium secondary battery according to the present invention, rapid-charging performance is excellent and degradation of battery performance caused by the lithium plating during rapid charging may be effectively prevented.

The lithium secondary battery according to the present invention as described above may be used to prepare a battery pack. The battery pack includes an assembly, in which lithium secondary batteries according to the present invention are electrically connected, and a pack housing accommodating the assembly. The pack housing may include a bus bar for electrically connecting the lithium secondary batteries, a cooling unit, or an external terminal. The battery pack may be mounted in a vehicle. The vehicle, for example, may be an electric vehicle, a hybrid vehicle, or a plug-in hybrid vehicle. The vehicle includes a four-wheeled vehicle or a two-wheeled vehicle. Particularly, since the lithium secondary battery according to the present invention has high energy density and excellent rapid-charging performance, it may be usefully employed as a battery for an electric vehicle.

Hereinafter, the present invention will be described in detail, according to specific examples. However, the following examples are merely provided to allow for a clearer understanding of the present invention, and the scope of the present invention is not limited thereto.

### Example 1

### <Negative Electrode Plate Preparation>

A negative electrode slurry was prepared by adding a negative electrode active material : a negative electrode conductive agent : a negative electrode binder to distilled water at a weight ratio of 97:1:2.

A mixture of a Si-C composite : a graphite-based negative electrode active material at a weight ratio of 3:97 was used as the negative electrode active material of the negative electrode slurry, and a mixture of artificial graphite : natural graphite at a weight ratio of 50:50 was used as the graphite-based negative electrode active material. Single-walled carbon nanotubes (CNT) were used as the negative electrode conductive agent. Also, styrene-butadiene rubber (SBR) : carboxymethyl cellulose (CMC) were mixed at a weight ratio of 1:1 and used as the negative electrode binder.

The negative electrode slurry was applied onto both surfaces of a copper current collector sheet such that a negative electrode loading amount was 12 mg/cm², dried, rolled, and then vacuum-dried. In this case, the negative electrode slurry was not applied to both end portions of the copper current collector sheet, and a negative electrode plate was prepared by welding a negative electrode tab to an uncoated portion where the negative electrode slurry was not applied.

### <Positive Electrode Plate Preparation>

A positive electrode slurry was prepared by adding a positive electrode active material : a positive electrode conductive agent : a positive electrode binder to N-methylpyrrolidone at a weight ratio of 96:2:2. LiNi_{0.9}Co_{0.05}Mn_{0.05}O₂ was used as the positive electrode active material, and Super P was used as the positive electrode conductive agent. Also, PVdF was used as the positive electrode binder.

The positive electrode slurry was applied onto both surfaces of an aluminum current collector sheet such that a positive electrode loading amount was 24 mg/cm², dried, rolled, and then vacuum-dried. In this case, the positive electrode slurry was not applied to a central portion of the aluminum current collector sheet, and a positive electrode plate was prepared by welding a positive electrode tab to an uncoated portion where the positive electrode slurry was not applied and attaching a 50 µm thick protective tape onto the positive electrode tab.

### <Preparation of Lithium Secondary Battery>

A separator was disposed between the above-prepared positive electrode plate and negative electrode plate such that they were stacked in the order of separator/positive electrode plate/separator/negative electrode plate and then wound to prepare an electrode assembly. Then, the electrode assembly was accommodated in a cylindrical battery can, the electrolyte was injected, the positive electrode tab and the negative electrode tab were respectively welded to a cap plate and the battery can, and the battery can was then sealed to prepare a lithium secondary battery.

### Example 2

A lithium secondary battery was prepared in the same manner as in Example 1 except that a 30 µm thick protective tape was attached onto the positive electrode tab during the preparation of the positive electrode plate.

### Example 3

A lithium secondary battery was prepared in the same manner as in Example 1 except that a Si-C composite : a graphite-based negative electrode active material were mixed at a weight ratio of 4.5:95.5 and used during the preparation of the negative electrode plate, and a 30 µm thick protective tape was attached onto the positive electrode tab during the preparation of the positive electrode plate.

### Example 4

A lithium secondary battery was prepared in the same manner as in Example 1 except that a Si-C composite : a graphite-based negative electrode active material were mixed at a weight ratio of 5:95 and used during the preparation of the negative electrode plate, and a 30 µm thick protective tape was attached onto the positive electrode tab during the preparation of the positive electrode plate.

### Comparative Example 1

A lithium secondary battery was prepared in the same manner as in Example 1 except that a Si-C composite : a graphite-based negative electrode active material were mixed at a weight ratio of 4:96 and used during the preparation of the negative electrode plate.

### Comparative Example 2

A lithium secondary battery was prepared in the same manner as in Example 1 except that a Si-C composite : a graphite-based negative electrode active material were mixed at a weight ratio of 5:95 and used during the preparation of the negative electrode plate.

### Comparative Example 3

A lithium secondary battery was prepared in the same manner as in Example 1 except that a Si-C composite : a graphite-based negative electrode active material were mixed at a weight ratio of 10:90 and used during the preparation of the negative electrode plate, and a 30 µm thick protective tape was attached onto the positive electrode tab during the preparation of the positive electrode plate.

### Experimental Example 1: Measurement of Negative Electrode Expansion Ratio

The positive electrode plates and negative electrode plates prepared by Examples 1 to 4 and Comparative Examples 1 to 3 were each punched into a size of 31 mm × 43 mm to prepare two positive electrode samples and three negative electrode samples. From two of the negative electrode samples, a negative electrode material mixture layer disposed on one surface of the negative electrode collector was removed to prepare single-sided negative electrode samples.

Then, the positive electrode samples and the negative electrode samples were stacked in the order of separator/single-sided negative electrode/separator/doublesided positive electrode/separator/double-sided negative electrode/separator/double-sided positive electrode/separator/single-sided negative electrode/separator to prepare an electrode assembly.

The prepared electrode assembly was accommodated in a pouch case, an electrolyte solution was injected, the pouch case was sealed to prepare a measurement cell, and a thickness t₀ of the measurement cell was measured.

Then, the measurement cell was mounted on a jig, pressurized at 0.156 MPa, and charged to 4.2 V under a 0.05 C cut-off condition. After completion of charging, the measurement cell was removed from the jig and a thickness t of the charged measurement cell was then measured. A negative electrode expansion ratio A was measured by substituting the measured t₀ and t into Equation (2) below. Measurement results are presented in [Table 1] below. Equation (2): $A = \left\{\left(t-{t}_{0}\right)/t\right\} \times 100$

**[Table 1]**

| | Negative electrode expansion ratio A [%] | Positive electrode tab protective film thickness [µm] | X |
|---|---|---|---|
| Example 1 | 3.4 | 50 | 170 |
| Example 2 | 3.5 | 30 | 105 |
| Example 3 | 5.5 | 30 | 165 |
| Example 4 | 6.2 | 30 | 186 |
| Comparative Example 1 | 4.8 | 50 | 240 |
| Comparative Example 2 | 6.4 | 50 | 320 |
| Comparative Example 3 | 13.4 | 30 | 402 |

### Experimental Example 2:

Charging of the lithium secondary batteries prepared by Examples 1 to 4 and Comparative Examples 1 to 3 at 1.5C in a constant current-constant voltage (CCCV) mode to a maximum charging voltage of 4.25 V under a 0.05C cut-off condition at 40°C and then discharging of the lithium secondary batteries at 1.5C in a CC mode to 2.5 V were defined as one cycle, and after charging and discharging were performed up to 100 cycles, the lithium secondary batteries were disassembled, and the presence or absence of lithium plating at an upper portion of the electrode assembly was visually observed and presented in Table 2 below. Cases in which lithium plating was observed are indicated as "O", and cases in which lithium plating was not observed are indicated as "X".

**[Table 2]**

| | Presence or absence of lithium plating |
|---|---|
| Example 1 | X |
| Example 2 | X |
| Example 3 | X |
| Example 4 | X |
| Comparative Example 1 | O |
| Comparative Example 2 | O |
| Comparative Example 3 | O |

From [Table 2], it may be confirmed that with respect to the lithium secondary batteries of Examples 1 to 4 in which X was 200 or less, lithium plating did not occur after high-rate charging and discharging, but with respect to the lithium secondary batteries of Comparative Examples 1 to 3 in which X was greater than 200, lithium plating occurred after high-rate charging and discharging.

## Claims

1. A lithium secondary battery comprising:
an electrode assembly having a structure in which a stacked sheet including positive electrode plates and negative electrode plates stacked with a separator disposed therebetween is wound; an electrolyte; a can in which the electrode assembly and the electrolyte are accommodated; and a cap assembly sealing an opening of the can,
wherein the positive electrode plate comprises a positive electrode collector, a positive electrode material mixture layer disposed on at least one surface of the positive electrode collector, a positive electrode tab electrically connected to the positive electrode collector, and a positive electrode tab protection member protecting the positive electrode tab,
wherein X defined by Equation (1) is 200 or less. Equation (1): $X = A \times B$
wherein, in Equation (1), A is an expansion ratio of the negative electrode plate as defined by Equation (2), and B is a thickness of the positive electrode tab protection member measured in µm. Equation (2): $A = \left\{\left(t-{t}_{0}\right)/t\right\} \times 100$
wherein, in Equation (2), t is a thickness of a measurement cell measured after punching the negative electrode plate and the positive electrode plate into a size of 31 mm × 43 mm to prepare two positive electrode samples and three negative electrode samples, removing a negative electrode material mixture layer disposed on one surface of a negative electrode collector from two of the negative electrode samples to prepare single-sided negative electrode samples, stacking the samples in the order of separator/single-sided negative electrode/separator/double-sided positive electrode/separator/double-sided negative electrode/separator/double-sided positive electrode/separator/single-sided negative electrode/separator to prepare an electrode assembly, accommodating the prepared electrode assembly in a pouch, injecting an electrolyte solution and sealing the pouch to prepare the measurement cell, and charging the measurement cell to 4.2 V under a 0.05 C cut-off condition after pressurizing the measurement cell at 0.156 MPa, and t₀ is a thickness of the measurement cell measured before the pressurizing and the charging.

2. The lithium secondary battery of claim 1, wherein the expansion ratio (A) of the negative electrode plate defined by Equation (2) is in a range of 2% to 10%.

3. The lithium secondary battery of claim 1, wherein the thickness (B) of the positive electrode tab protection member is in a range of 10 µm to 60 µm.

4. The lithium secondary battery of claim 1, wherein the positive electrode tab is disposed at a central portion of the positive electrode plate.

5. The lithium secondary battery of claim 1, wherein a positive electrode loading amount is 20 mg/cm² or more.

6. The lithium secondary battery of claim 1, wherein the positive electrode material mixture layer comprises a positive electrode active material having a bimodal particle size distribution.

7. The lithium secondary battery of claim 1, wherein the positive electrode active material comprises large particles having an average particle diameter of 8 µm to 20 µm and small particles having an average particle diameter of less than 8 µm, and
the large particles and the small particles each independently comprise a lithium nickel-based oxide represented by [Formula 1].
[Formula 1] LiₓNiₐCo_{b}M¹_{c}M²_{d}O₂
wherein, in [Formula 1], M¹ is at least one selected from manganese (Mn) and aluminum (Al),
M² is at least one selected from the group consisting of zirconium (Zr), yttrium (Y), boron (B), tungsten (W), magnesium (Mg), Cerium (Ce), hafnium (Hf), tantalum (Ta), lanthanum (La), titanium (Ti), strontium (Sr), barium (Ba), fluorine (F), phosphorus (P), and sulfur (S), and 0.90≤x≤1.1, 0.50≤a<1.0, 0<b<0.5, 0<c<0.5, and 0≤d≤0.1.

8. The lithium secondary battery of claim 1, wherein the negative electrode plate comprises a negative electrode collector, a negative electrode material mixture layer disposed on at least one surface of the negative electrode collector, and a negative electrode tab electrically connected to the negative electrode collector,
wherein the negative electrode material mixture layer comprises a Si-C composite and a graphite-based negative electrode active material.

9. The lithium secondary battery of claim 8, wherein the Si-C composite and the graphite-based negative electrode active material are included at a weight ratio of 3:97 to 20:80.

10. The lithium secondary battery of claim 1, wherein a negative electrode loading amount is 10 mg/cm² or more.

11. The lithium secondary battery of claim 1, wherein lithium plating is not observed at an upper portion of the electrode assembly when the lithium secondary battery is subjected to 100 charge-discharge cycles at 40°C under 1.5C charge and 1.5C discharge conditions.

12. The lithium secondary battery of claim 1, wherein the lithium secondary battery is a cylindrical battery.
